# EUROPÄISCHE PATENTANMELDUNG

(11) **EP 2 499 996 A1**
(43) Veröffentlichungstag der Anmeldung: **19.09.2012**
(21) Anmeldenummer: 12155360.6
(22) Anmeldetag: 14.02.2012
(51) Int. Cl.: A61C 19/045

(54) **Elektronisches Registriergerät zur Erfassung von Kieferbewegungen**

(30) Priorität: 18.03.2011 DE 102011005802
(71) Anmelder: Kaltenbach & Voigt GmbH, 88400 Biberach (DE)
(72) Erfinder: Lang, Hans Walter, 88200 Leutkirch (DE)
(74) Vertreter: Thun, Clemens

(57) **Zusammenfassung**

Die Erfindung betrifft ein elektronisches Registriergerät zur Erfassung von Bewegungen des Unterkiefers eines Menschen relativ zu dem Oberkiefer des Menschen; das Registriergerät weist eine Bissgabel (2) zur Erfassung einer Relativposition des Oberkiefers zu Bezugspunkten am Kopf des Menschen auf, wobei die Bissgabel (2) dazu ausgebildet ist, eine plastische Masse zur Erfassung eines Abdrucks (10) der Zahnreihe des Oberkiefers aufzunehmen. Weiterhin weist das Registriergerät eine Unterkieferbefestigung zur Erfassung von Bewegungen des Unterkiefers gegenüber dem Oberkiefer auf. Außerdem weist das Registriergerät einen Referenzkörper (6) auf, wobei das Registriergerät dazu ausgebildet ist, dass der Referenzkörper (6) lagefest mit der Bissgabel (2) verbunden werden kann; dabei sind die Bissgabel (2) und der mit dieser lagefest verbundene Referenzkörper (6) derart ausgestaltet, dass sowohl der Abdruck (10) als auch der Referenzkörper (6) durch ein Scannen erfasst werden können. Auf diese Weise lässt sich ein Zusammenhang zwischen dem gescannten Abdruck (10) und den von dem Registriergerät erfassten Bewegungsdaten herstellen. Hierdurch lässt sich erzielen, dass Einstellwerte für einen virtuellen Artikulator ermittelt werden können, ohne dass Gipsmodelle der Zahnreihen von Ober- und Unterkiefer hergestellt werden müssen. Außerdem wird durch das erfmdungsgemäße Registriergerät ermöglicht, dass dreidimensionale Daten eines Röntgensystems mit den Bewegungsdaten des Registriergeräts überlagert werden können. Hierdurch ist eine Herstellung von Bohrschablonen in der Implantologie erleichtert.

## Beschreibung

Die Erfindung betrifft ein elektronisches Registriergerät zur Erfassung von Bewegungen des Unterkiefers eines Menschen relativ zu dem Oberkiefer des Menschen, das eine Bissgabel zur Erfassung einer Relativposition des Oberkiefers zu Bezugspunkten am Kopf des Menschen aufweist, wobei die Bissgabel dazu ausgebildet ist, eine plastische Masse zur Erfassung eines Abdrucks der Zahnreihe des Oberkiefers aufzunehmen, sowie eine Unterkieferbefestigung zur Erfassung von Bewegungen des Unterkiefers gegenüber dem Oberkiefer.

Zur Herstellung von Zahnersatz, wie Kronen und Brücken ist es bekannt, Modelle von Zahnreihen eines Oberkiefers und des dazugehörenden Unterkiefers aus Wachs zu modellieren und diese in einem Artikulator durch Artikulationsbewegungen solange auf ihre Formgestaltung hin zu optimieren, bis eine harmonische Bewegung der Zahnformen zueinander gegeben ist. Dies wird als funktioneller Abgleich bezeichnet. Auf diese Weise lassen sich im Weiteren zeitintensive Einschleifarbeiten im Mund des betreffenden Patienten weitgehend vermeiden.

Die im Artikulator optimierte Zahnform wird dann gemäß dem Stand der Technik anschließend durch Scannen erfasst und in einem weiteren Schritt wird der gewünschte Zahnersatz, also beispielsweise die Krone bzw. Brücke mithilfe einer CAD CAM Fräs-/Schleifmaschine unter Nutzung der durch das Scannen erfassten Daten hergestellt, vorzugsweise aus Keramik.

Bekannt ist weiterhin eine Art "virtueller Artikulator". Hierbei handelt es sich um eine Software, mit der eine Bewegung der beiden gescannten Gipsmodelle von Ober- und Unterkiefer relativ zueinander simuliert werden kann. Um Einstelldaten für diesen virtuellen Artikulator ermitteln zu können, ist es zunächst erforderlich, die entsprechenden Gipsmodelle von Ober- und Unterkiefer-Zahnreihen herzustellen; anschließend müssen die Einstellwerte mithilfe dieser Gipsmodelle und eines mechanischen Artikulators ermittelt werden. Dies erfordert vergleichsweise hohen Aufwand.

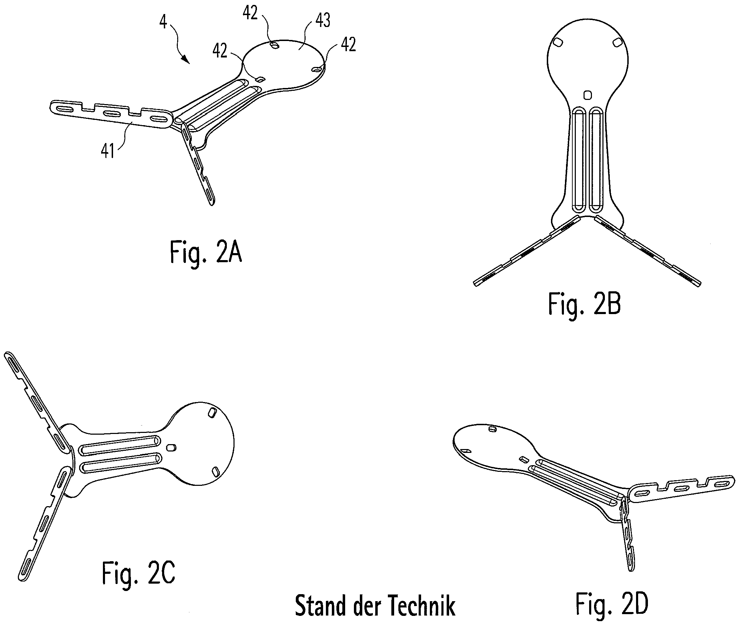

Aus der WO 2007/020091 A1 ist ein von der Anmelderin unter der Handelsbezeichnung "ARCUS digma" vertriebenes elektronisches Registriergerät bekannt, das zur Einstellung von Artikulatoren dient. Mit diesem Gerät kann eine elektronische Positionsanalyse des Unterkiefers durchgeführt werden. Um die Bewegungen des Unterkiefers gegenüber dem Oberkiefer zu messen, wird mit dem Oberkiefer und dem Unterkiefer jeweils ein Traggestell verbunden. Das mit dem Oberkiefer am oberen Teil des Kopfes verbundene Traggestell, im Folgenden auch "Kopfteil" genannt, wird mit vier Mikrofonen in Form von Ultraschall-Empfängerelementen versehen, das mit dem Unterkiefer verbundene Traggestell, im Folgenden auch "Unterkieferbefestigung" genannt, mit drei entsprechenden Ultraschallsendern. Die zwölf Strecken zwischen den drei Sendern und den vier Mikrofonen werden bei Bewegungen des Unterkiefers gegenüber dem Oberkiefer hinsichtlich ihrer Längenänderungen ausgewertet. In den Figuren 2A, 2B, 2C und 2D sind Skizzen der Unterkieferbefestigung aus unterschiedlichen Perspektiven wiedergegeben.

Das Kopfteil umfasst ein Basiselement mit Stützelementen zum Stützen des Kopfteils an dem Kopf des betreffenden Menschen bzw. eines Patienten. Diese Stützelemente können insbesondere zwei rückwärtige Abstützelemente umfassen, die zur Anlage im Bereich der beiden Ohren ausgebildet sind, sowie ein Nasenstütze, die zur Anlage am oberen Nasenansatz ausgebildet ist.

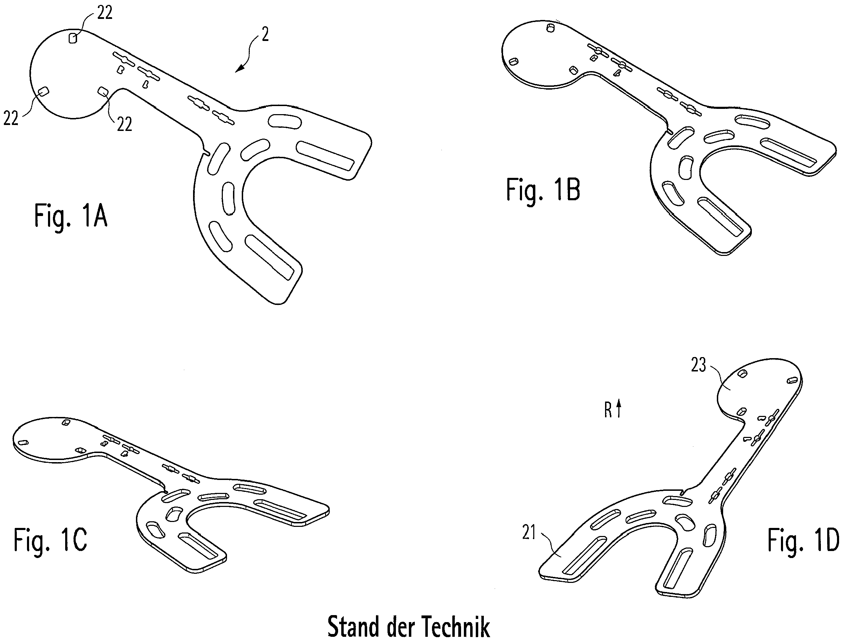

Weiterhin umfasst das bekannte elektronische Registriergerät ARCUS digma eine Bissgabel, die zur Erfassung der Position der Oberkiefer-Zahnreihe relativ zu den Gehörgängen dient. In den Figuren 1A, 1B, 1C und 1D sind Skizzen der Bissgabel aus unterschiedlichen Perspektiven wiedergegeben.

Der Erfindung liegt die Aufgabe zugrunde, ein System anzugeben, mit dem die Herstellung von Zahnersatz, beispielsweise von Kronen bzw. Brücken einfacher möglich ist. Weiterhin soll eine verbesserte Herstellung von Bohrschablonen in der Implantologie ermöglicht werden.

Diese Aufgabe wird gemäß der Erfindung mit den in den unabhängigen Ansprüchen angegebenen Gegenständen gelöst. Besondere Ausführungsarten der Erfindung sind in den abhängigen Ansprüchen angegeben.

Gemäß der Erfindung ist ein elektronisches Registriergerät zur Erfassung von Bewegungen des Unterkiefers eines Menschen relativ zu dem Oberkiefer des Menschen vorgesehen; das Registriergerät weist eine Bissgabel zur Erfassung einer Relativposition des Oberkiefers zu Bezugspunkten am Kopf des Menschen auf, wobei die Bissgabel dazu ausgebildet ist, eine plastische Masse zur Erfassung eines Abdrucks der Zahnreihe des Oberkiefers aufzunehmen. Weiterhin weist das Registriergerät eine Unterkieferbefestigung zur Erfassung von Bewegungen des Unterkiefers gegenüber dem Oberkiefer auf. Außerdem weist das Registriergerät einen Referenzkörper auf, wobei das Registriergerät dazu ausgebildet ist, dass der Referenzkörper lagefest mit der Bissgabel verbunden werden kann; dabei sind die Bissgabel und der mit dieser lagefest verbundene Referenzkörper derart ausgestaltet, dass sowohl der Abdruck als auch der Referenzkörper durch ein Scannen, insbesondere durch ein zusammenhängendes Scannen erfasst werden können.

Durch das Scannen des Referenzkörpers und des Abdrucks ist ermöglicht, einen Zusammenhang zwischen dem gescannten Abdruck und den von dem Registriergerät erfassten Bewegungsdaten zu erhalten bzw. herzustellen. Auf diese Weise lässt sich erzielen, dass Einstellwerte für einen virtuellen Artikulator ermittelt werden können, ohne dass Gipsmodelle der Zahnreihen von Ober- und Unterkiefer hergestellt werden müssen.

Weiterhin wird durch das erfmdungsgemäße Registriergerät ermöglicht, dass dreidimensionale Daten eines Röntgensystems mit den Bewegungsdaten des Registriergeräts überlagert werden können. Hierdurch ist eine Herstellung von Bohrschablonen in der Implantologie erleichtert.

Vorzugsweise weist der Referenzkörper erste Formschlusselemente auf und die Bissgabel zweite Formschlusselemente, derart, dass zur Herstellung der lagefesten Verbindung des Referenzkörpers mit der Bissgabel die ersten Formschlusselemente mit den zweiten Formschlusselementen in eine Formschlussverbindung gebracht werden können. Auf diese Weise lässt sich die lagefeste Verbindung zwischen dem Referenzkörper und der Bissgabel besonders einfach bzw. handhabungsfreundlich herstellen.

Vorzugsweise ist das Registriergerät weiterhin derart ausgebildet, dass der Referenzkörper außerdem alternativ mit der Unterkieferbefestigung lagefest verbunden werden kann.

Vorzugsweise weist weiterhin die Unterkieferbefestigung dritte Formschlusselemente auf, derart, dass zur Herstellung der lagefesten Verbindung des Referenzkörpers mit der Unterkieferbefestigung die ersten Formschlusselemente mit den dritten Formschlusselementen in eine weitere Formschlussverbindung gebracht werden können. Auf diese Weise lässt sich die lagefeste Verbindung zwischen dem Referenzkörper und der Unterkieferbefestigung besonders einfach bzw. handhabungsfreundlich herstellen.

Vorteilhaft weist der Referenzkörper mehrere, vorzugsweise wenigstens drei, stift-oder halbkugelförmige Scann-Elemente auf, die vorzugsweise von einer planen Oberfläche des Referenzkörpers abstehend ausgebildet sind. Vorzugsweise weisen dabei wenigstens zwei der Scann-Elemente unterschiedliche Formen auf.

Gemäß einem weiteren Aspekt der Erfindung ist ein elektronisches Registriergerät zur Erfassung von Bewegungen des Unterkiefers eines Menschen relativ zu dem Oberkiefer des Menschen vorgesehen, das eine Bissgabel zur Erfassung einer Relativposition des Oberkiefers zu Bezugspunkten am Kopf des Menschen aufweist, wobei die Bissgabel dazu ausgebildet ist, eine plastische Masse zur Erfassung eines Abdrucks der Zahnreihe des Oberkiefers aufzunehmen. Weiterhin weist das Registriergerät eine Unterkieferbefestigung zur Erfassung von Bewegungen des Unterkiefers gegenüber dem Oberkiefer auf. Die Bissgabel weist einen ersten Referenzkörper auf, der lagefest mit der restlichen Bissgabel verbunden ist und die Unterkieferbefestigung weist einen zweiten Referenzkörper auf, der lagefest mit der restlichen Unterkieferbefestigung verbunden ist; dabei ist die Bissgabel derart ausgestaltet, dass sowohl der Abdruck als auch der erste Referenzkörper durch ein Scannen, insbesondere ein zusammenhängendes Scannen erfasst werden können. Vorzugsweise weisen dabei der erste Referenzkörper und der zweite Referenzkörper jeweils mehrere, vorzugsweise jeweils wenigstens drei, stift- oder halbkugelförmige Scann-Elemente auf, die vorzugsweise jeweils von einer planen Oberfläche des betreffenden Referenzkörpers abstehend ausgebildet sind.

Weiterhin vorzugsweise weisen dabei wenigstens zwei der Scann-Elemente des ersten Referenzkörpers unterschiedliche Formen auf und/oder wenigstens zwei der Scann-Elemente des zweiten Referenzkörpers unterschiedliche Formen auf.

Die Erfindung wird im Folgenden anhand von Ausführungsbeispielen und mit Bezug auf die Zeichnungen näher erläutert. Es zeigen:
Figuren 1A bis 1D Skizzen einer Bissgabel aus unterschiedlichen Perspektiven,
Figuren 2A bis 2D Skizzen einer Unterkieferbefestigung aus unterschiedlichen Perspektiven,
Fig. 3A eine Bissgabel mit einem ersten Ausführungsbeispiel eines erfmdungsgemäßen Referenzkörpers,
Fig. 3B eine Bissgabel mit einem zweiten Ausführungsbeispiel eines erfindungsgemäßen Referenzkörpers,
Fig. 3C eine Unterkieferbefestigung mit einem Referenzkörper gemäß dem ersten Ausführungsbeispiel,
Fig. 3D eine Unterkieferbefestigung mit einem Referenzkörper gemäß dem zweiten Ausführungsbeispiel,
Fig. 4 eine perspektivische Ansicht des Referenzkörpers gemäß dem ersten Ausführungsbeispiel,
Fig. 5 eine perspektivische Ansicht des Referenzkörpers gemäß dem zweiten Ausführungsbeispiel,
Figuren 6A bis 6C weitere Skizzen des Referenzkörpers gemäß dem ersten Ausführungsbeispiel,
Figuren 7A bis 7C weitere Skizzen des Referenzkörpers gemäß dem zweiten Ausführungsbeispiel,
Fig. 8 eine Prinzipskizze zur Verwendung einer Bissgabel mit dem Referenzkörper gemäß dem ersten Ausführungsbeispiel,
Fig. 9 eine Skizze zu Bezugspunkten zwischen einem "ARCUS digma" und einem Artikulator und
Fig. 10 eine Skizze zu Bezugspunkten eines Artikulators.

Gemäß der Erfindung ist ein elektronisches Registriergerät vorgesehen zur Erfassung von Bewegungen des Unterkiefers eines Menschen relativ zu dem Oberkiefer des Menschen. Das Registriergerät kann die Merkmale des eingangs erwähnten Geräts "ARCUS digma" aufweisen. Insbesondere kann das Registriergerät ein entsprechendes Kopfteil umfassen, das ein Basiselement mit Stützelementen zum Stützen des Kopfteils an dem Kopf eines Patienten umfasst. Diese Stützelemente können insbesondere zwei rückwärtige Abstützelemente umfassen, die zur Anlage im Bereich der beiden Ohren, beispielsweise zur Anlage in den äußeren Gehörkanälen, ausgebildet sind, sowie eine Nasenstütze, die zur Anlage am oberen Nasenansatz ausgebildet ist.

Weiterhin umfasst das Registriergerät eine Bissgabel, die zur Erfassung einer Relativposition des Oberkiefers zu Bezugspunkten am Kopf des Menschen dient bzw. ausgebildet ist. Wie eingangs bereits erwähnt, sind in den Figuren 1A bis 1D Skizzen einer bekannten Ausführung einer Bissgabel 2 aus unterschiedlichen Perspektiven wiedergegeben. Die Bissgabel 2 ist dazu ausgebildet, eine plastische Masse, beispielsweise Wachs oder Silikon zur Erfassung eines Abdrucks der Zahnreihe des Oberkiefers aufzunehmen. Hierzu weist die Bissgabel 2 eine Aufnahmefläche 21 zur Aufnahme der plastischen Masse auf, wobei die Aufnahmefläche 21 eine Flächennormale in eine Richtung R aufweist; außerdem weist die Bissgabel 2 eine weitere Fläche 23 auf, deren Flächennormale ebenfalls in die Richtung R weist, wobei die Bissgabel 2 derart gestaltet ist, dass sich die weitere Fläche 23 außerhalb der Mundhöhle des Menschen befindet, wenn die Bissgabel 2 zur Abnahme des Abdrucks der Zahnreihe des Oberkiefers positioniert ist.

Weiterhin umfasst das Registriergerät eine Unterkieferbefestigung. Wie eingangs bereits erwähnt, sind in den Figuren 2A bis 2D Skizzen einer bekannten Unterkieferbefestigung 4 aus unterschiedlichen Perspektiven wiedergegeben. Die Unterkieferbefestigung 4 dient zur Erfassung von Bewegungen des Unterkiefers gegenüber dem Oberkiefer. Die Unterkieferbefestigung weist einen abgewinkelten, länglichen Kontaktbereich 41 auf, der dazu vorgesehen ist, beispielsweise über eine Klebeverbindung mit den Frontalflächen der vorderen Zähne des Unterkiefers verbunden zu werden. Weiterhin weist die Unterkieferbefestigung eine Fläche 43 auf, die zumindest näherungsweise in einer durch den länglichen Kontaktbereich 41 festgelegten Ebene orientiert ist und die sich außerhalb der Mundhöhle des Menschen befmdet, wenn die Unterkieferbefestigung 4 wie vorgesehen mit den Zähnen des Unterkiefers verbunden ist.

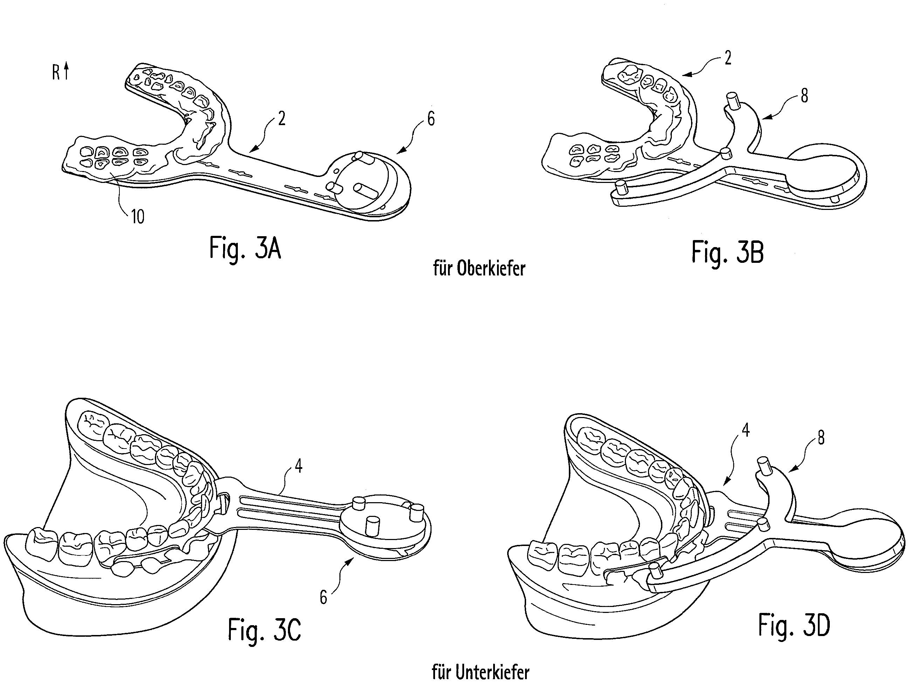

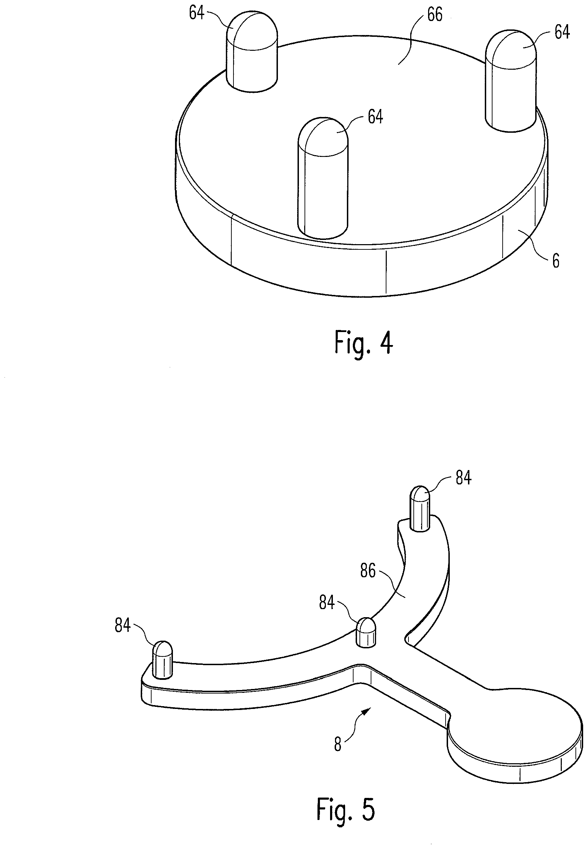

Außerdem weist das Registriergerät - im Unterschied zu dem "ARCUS digma"-Gerät - einen Referenzkörper auf. In Fig. 4 ist ein Referenzkörper 6 gemäß einem ersten Ausfiihrungsbeispiel skizziert. Das Registriergerät ist derart gestaltet, dass der Referenzkörper 6 lagefest, und dabei vorzugsweise reversibel lagefest, mit der Bissgabel 2 verbunden werden kann, wie in Fig. 3A skizziert. Die Gestaltung ist mit anderen Worten derart, dass der Referenzkörper 6 in einer definierten Relativposition zu der Bissgabel 2 mit Letzterer verbunden werden kann.

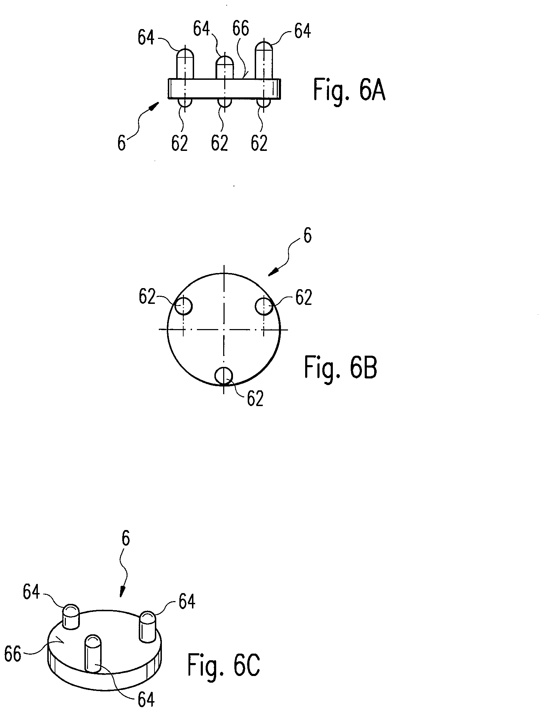

Insbesondere kann hierzu eine Formschlussverbindung zwischen dem Referenzkörper 6 und der Bissgabel 2 vorgesehen sein. Hierdurch ist eine besonders einfache Handhabung ermöglicht. Hierzu kann der Referenzkörper 6 beispielsweise - exemplarisch in Fig. 6A bezeichnete - erste Formschlusselemente 62 aufweisen und die Bissgabel 2 - exemplarisch in Fig. 1A bezeichnete - zweite Formschlusselemente 22, die zur Herstellung der Formschlussverbindung mit den ersten Formschlusselementen 62 in definierter Weise verbunden werden können. Die ersten Formschlusselemente 22 können durch wenigstens drei Eingriffselemente gebildet sein und die zweiten Formschlusselemente 22 durch entsprechend kongruent ausgebildete Öffnungen. Hierdurch ist eine besonders leichte Handhabung bei der Herstellung der lagefesten Verbindung des Referenzkörpers 6 mit der Bissgabel 2 ermöglicht. Die Figuren 6B und 6C zeigen Skizzen des Referenzkörpers 4 aus weiteren Perspektiven.

Weiterhin ist in Fig. 3A ein entsprechender Abdruck 10 der Zahnreihe des Oberkiefers bezeichnet.

Vorzugsweise ist vorgesehen, dass der Referenzkörper 6 zur Herstellung der lagefesten Verbindung auf der weiteren Fläche 23 der Bissgabel 2 angeordnet werden kann. Hierzu können die zweiten Formschlusselemente 22 bzw. die Öffnungen an bzw. in der weiteren Fläche 23 der Bissgabel 2 ausgebildet sein.

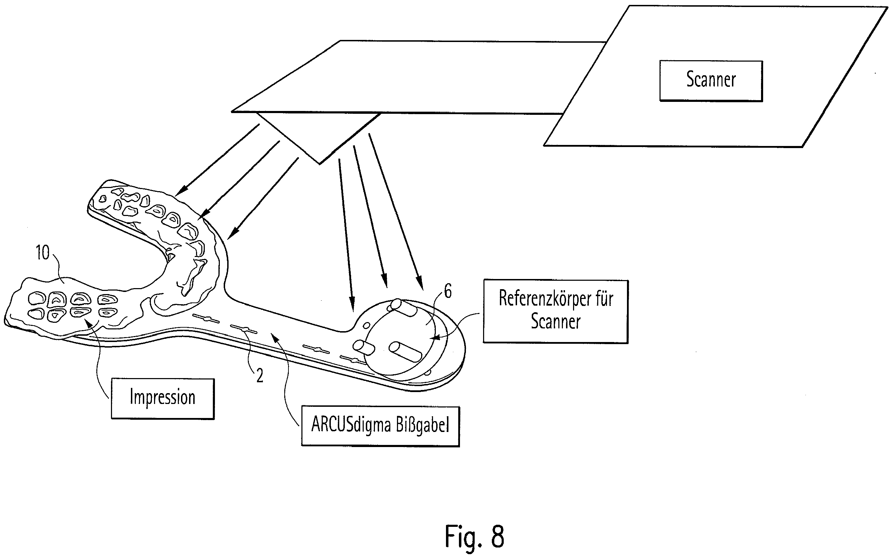

Das Registriergerät ist derart ausgestaltet, dass sowohl der mit der Bissgabel 2 erfasste Abdruck 10 der Zahnreihe des Oberkiefers (Impression), als auch der Referenzkörper 6 durch ein Scannen erfasst werden können, insbesondere durch ein Scannen, bei dem die Position des Referenzkörpers 6 relativ zu dem Abdruck 10 erfasst werden kann. Dies ist in Fig. 8 skizzenartig angedeutet. Durch ein derartiges Scannen ist ermöglicht, einen Zusammenhang zwischen dem gescannten Abdruck 10 einerseits und den von dem Registriergerät erfassten Bewegungsdaten andererseits herzustellen. Auf diese Weise lässt sich erzielen, dass Einstellwerte für einen virtuellen Artikulator ermittelt werden können, insbesondere ohne dass hierfür Gipsmodelle der Zahnreihen von Ober- und Unterkiefer hergestellt werden müssen. Außerdem ist durch das erfindungsgemäße Registriergerät ermöglicht, dass dreidimensionale Daten eines Röntgensystems mit den Bewegungsdaten des Registriergeräts überlagert werden können. Hierdurch ist eine Herstellung von Bohrschablonen in der Implantologie erleichtert. Für die Zuordnung der beiden Systeme ARCUS digma und CAD CAM bzw. ARCUS digma und 3D Scan wird das komplette Bauteil, bestehend aus der Bissgabel 2 und dem Referenzkörper 6 angescannt. Sowohl die Zahnimpressionen als auf die Zähnen in Relation zum Scannkörper bzw. Referenzkörper 6 werden in einen Scan erfasst.

Vorzugsweise ist das Registriergerät weiterhin derart ausgebildet, dass der Referenzkörper 6 außerdem mit der Unterkieferbefestigung 4 lagefest verbunden werden kann, wie dies exemplarisch in Fig. 3C skizziert ist. Hierzu kann die Unterkieferbefestigung 4 vorteilhaft dritte Formschlusselemente 42 aufweisen, insbesondere in Form von - exemplarisch in Fig. 2A bezeichneten - Öffnungen, die vorzugsweise analog zu den zweiten Formschlusselementen 22 bzw. den Öffnungen der Bissgabel 2 ausgebildet sind. Auf diese Weise lässt sich der Referenzkörper 6 besonders einfach wahlweise auf der Bissgabel 2 oder der Unterkieferbefestigung 4 lagefest aufsetzen. Vorteilhaft sind die dritten Formschlusselemente 42 auf bzw. an der Fläche 43 der Unterkieferbefestigung 4 ausgebildet.

Vorteilhaft weist der Referenzkörper 6 mehrere, vorzugsweise wenigstens drei, stift- oder halbkugelförmige Scann-Elemente 64 auf, die vorzugsweise von einer planen Oberfläche 66 des Referenzkörpers 6 abstehend ausgebildet sind. Vorzugsweise ist die Ausgestaltung derart, dass die Scann-Elemente 64 in Richtung R von dem restlichen Referenzkörper 6 bzw. der planen Oberfläche 66 abstehend angeordnet bzw. ausgebildet sind, wenn sich der Referenzkörper 6 in der lagefesten Verbindung mit der Bissgabel 2 befindet. Dabei weisen vorteilhaft wenigstens zwei der Scann-Elemente 64 unterschiedliche Formen auf. Beispielsweise können - wie exemplarisch in den Figuren 4, 6A und 6C skizziert, unterschiedliche lange Stifte als Scann-Elemente 64 vorgesehen sein.

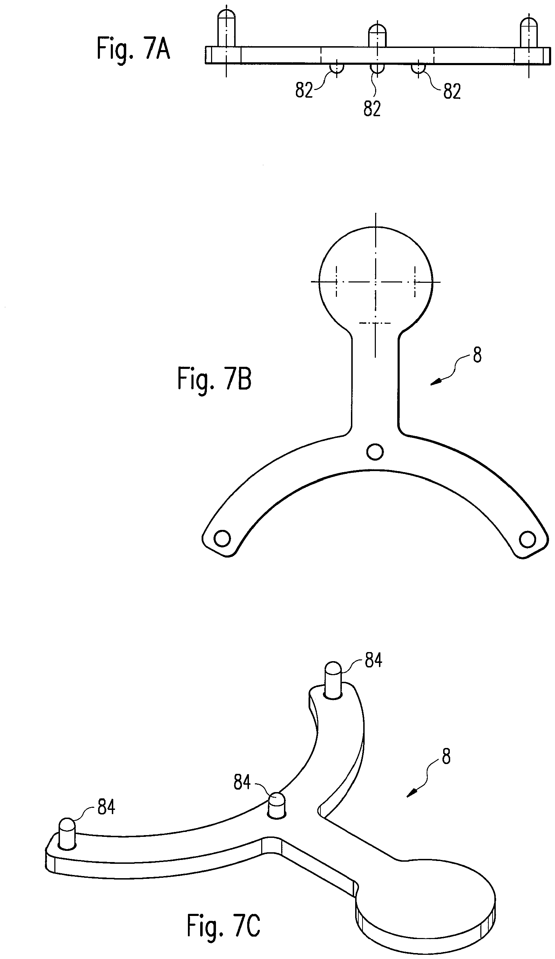

In Fig. 5 ist ein Referenzkörper 8 gemäß einem zweiten Ausführungsbeispiel skizziert. Dieser Referenzkörper 8 kann Scann-Elemente 84 aufweisen, die analog zu den Scann-Elementen 64 beim ersten Ausführungsbeispiel ausgebildet sind; weiterhin kann der Referenzkörper 8 gemäß dem zweiten Ausführungsbeispiel entsprechende, in Fig. 7A bezeichnete erste Formschlusselemente 82 bzw. Eingriffselemente aufweisen. In Fig. 3B ist der Referenzkörper 8 gemäß dem zweiten Ausführungsbeispiel verbunden mit der Bissgabel 2 skizziert gezeigt und in Fig. 3D verbunden mit der Unterkieferbefestigung 4. Die Figuren 7B und 7C zeigen weitere Ansichten des Referenzkörpers 8 gemäß dem zweiten Ausführungsbeispiel.

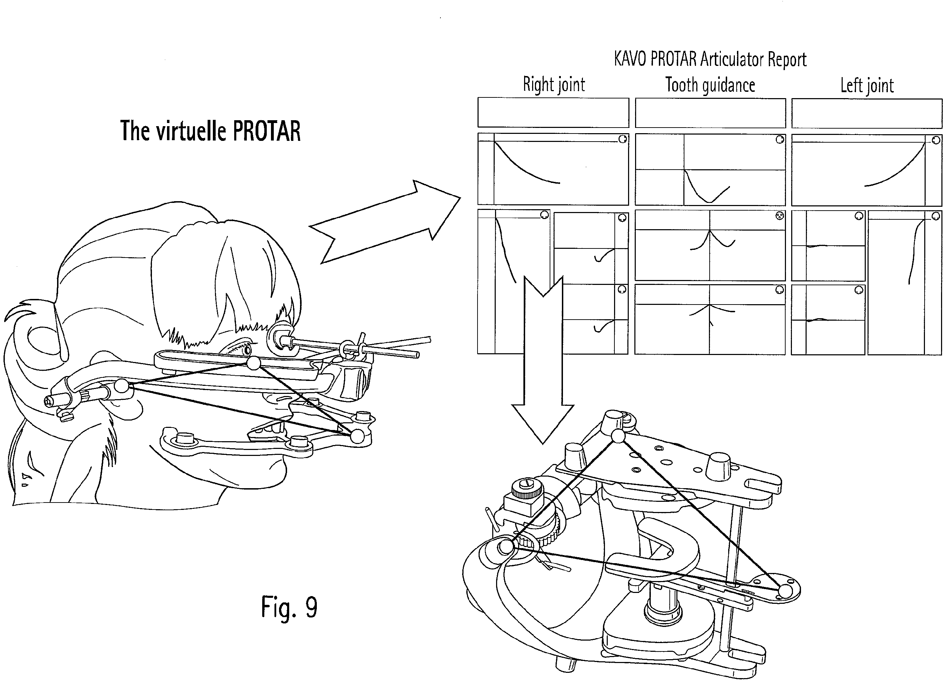

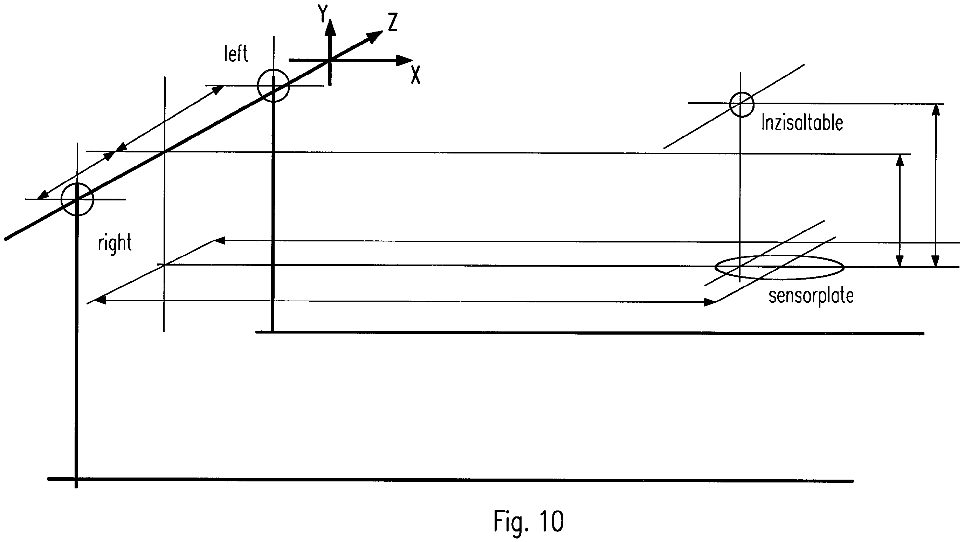

In Fig. 9 ist eine Zuordnung von Bezugspunkten zwischen dem elektronischen Registriergerät und einem Artikulator gezeigt. Fig. 10 zeigt skizzenartig ein entsprechendes Koordinatensystem.

Alternativ zu dem oben beschriebenen Referenzkörper 6 bzw. 8 kann vorgesehen sein, dass die Bissgabel des elektronischen Registriergeräts einen ersten Referenzkörper aufweist, der lagefest mit der restlichen Bissgabel verbunden ist und dass die Unterkieferbefestigung einen zweiten Referenzkörper aufweist, der lagefest mit der restlichen Unterkieferbefestigung verbunden ist, wobei die Bissgabel derart ausgestaltet ist, dass sowohl der Abdruck als auch der erste Referenzkörper durch ein entsprechendes Scannen erfasst werden können. Der erste Referenzkörper kann dabei vorteilhaft einstückig mit der restlichen Bissgabel ausgebildet sein und der zweite Referenzkörper kann einstückig mit der Unterkieferbefestigung ausgebildet sein. Die beiden Referenzkörper weisen dabei vorzugsweise jeweils Scann-Elemente auf, die analog zu den oben beschriebenen Scann-Elementen 64 des Referenzkörpers 6 gemäß dem ersten Ausfiihrungsbeispiel ausgebildet sind.

## Patentansprüche

1. Elektronisches Registriergerät zur Erfassung von Bewegungen des Unterkiefers eines Menschen relativ zu dem Oberkiefer des Menschen, aufweisend
- eine Bissgabel (2) zur Erfassung einer Relativposition des Oberkiefers zu Bezugspunkten am Kopf des Menschen,
wobei die Bissgabel (2) dazu ausgebildet ist, eine plastische Masse zur Erfassung eines Abdrucks (10) der Zahnreihe des Oberkiefers aufzunehmen und
- eine Unterkieferbefestigung (4) zur Erfassung von Bewegungen des Unterkiefers gegenüber dem Oberkiefer,
**gekennzeichnet durch** einen Referenzkörper (6, 8), wobei das Registriergerät dazu ausgebildet ist, dass der Referenzkörper (6, 8) lagefest mit der Bissgabel (2) verbunden werden kann, wobei die Bissgabel (2) und der mit dieser lagefest verbundene Referenzkörper (6, 8) derart ausgestaltet sind, dass sowohl der Abdruck (10) als auch der Referenzkörper (6, 8) **durch** ein Scannen, insbesondere ein zusammenhängendes Scannen erfasst werden können.

2. Elektronisches Registriergerät nach Anspruch 1,
bei dem der Referenzkörper (6, 8) erste Formschlusselemente (62, 82) aufweist und die Bissgabel (2) zweite Formschlusselemente (22), derart, dass zur Herstellung der lagefesten Verbindung des Referenzkörpers (6, 8) mit der Bissgabel (2) die ersten Formschlusselemente (62, 82) mit den zweiten Formschlusselementen (22) in eine Formschlussverbindung gebracht werden können.

3. Elektronisches Registriergerät nach Anspruch 1 oder 2,
das weiterhin derart ausgebildet ist, dass der Referenzkörper (6, 8) außerdem alternativ mit der Unterkieferbefestigung (4) lagefest verbunden werden kann.

4. Elektronisches Registriergerät mit den in den Ansprüchen 2 und 3 genannten Merkmalen,
bei dem die Unterkieferbefestigung (4) dritte Formschlusselemente (42) aufweist, derart, dass zur Herstellung der lagefesten Verbindung des Referenzkörpers (6, 8) mit der Unterkieferbefestigung (4) die ersten Formschlusselemente (62, 82) mit den dritten Formschlusselementen (42) in eine weitere Formschlussverbindung gebracht werden können.

5. Elektronisches Registriergerät nach einem der vorhergehenden Ansprüche, wobei der Referenzkörper (6, 8) mehrere, vorzugsweise wenigstens drei, stift- oder halbkugelförmige Scann-Elemente (64) aufweist, die vorzugsweise von einer planen Oberfläche (66) des Referenzkörpers (6, 8) abstehend ausgebildet sind.

6. Elektronisches Registriergerät nach Anspruch 5,
bei dem wenigstens zwei der Scann-Elemente (64) unterschiedliche Formen aufweisen.

7. Elektronisches Registriergerät zur Erfassung von Bewegungen des Unterkiefers eines Menschen relativ zu dem Oberkiefer des Menschen, aufweisend
- eine Bissgabel zur Erfassung einer Relativposition des Oberkiefers zu Bezugspunkten am Kopf des Menschen,
wobei die Bissgabel dazu ausgebildet ist, eine plastische Masse zur Erfassung eines Abdrucks der Zahnreihe des Oberkiefers aufzunehmen und
- eine Unterkieferbefestigung zur Erfassung von Bewegungen des Unterkiefers gegenüber dem Oberkiefer,
**dadurch gekennzeichnet, dass** die Bissgabel einen ersten Referenzkörper aufweist, der lagefest mit der restlichen Bissgabel verbunden ist und dass die Unterkieferbefestigung einen zweiten Referenzkörper aufweist, der lagefest mit der restlichen Unterkieferbefestigung verbunden ist, wobei die Bissgabel derart ausgestaltet ist, dass sowohl der Abdruck als auch der erste Referenzkörper durch ein Scannen, insbesondere ein zusammenhängendes Scannen erfasst werden können.

8. Elektronisches Registriergerät nach Anspruch 7,
bei dem der erste Referenzkörper und der zweite Referenzkörper jeweils mehrere, vorzugsweise jeweils wenigstens drei, stift- oder halbkugelförmige Scann-Elemente aufweisen, die vorzugsweise jeweils von einer planen Oberfläche des betreffenden Referenzkörpers abstehend ausgebildet sind.

9. Elektronisches Registriergerät nach Anspruch 8,
bei dem wenigstens zwei der Scann-Elemente des ersten Referenzkörpers unterschiedliche Formen aufweisen und/oder wenigstens zwei der Scann-Elemente des zweiten Referenzkörpers unterschiedliche Formen aufweisen.
